Europäisches Patentamt

European Patent Office

Office européen des brevets

(11) Veröffentlichungsnummer: **0 081 189**
**B1**

(12) **EUROPÄISCHE PATENTSCHRIFT**

(45) Veröffentlichungstag der Patentschrift:
20.05.87

(21) Anmeldenummer: **82111071.5**

(22) Anmeldetag: **30.11.82**

(51) Int. Cl.⁴: **H 02 K 49/04 //**
**B66D5/02**

(54) Vorrichtung zum Abbremsen von Gegenständen.

(30) Priorität: **05.12.81 DE 3148269**
**15.02.82 DE 3205295**

(43) Veröffentlichungstag der Anmeldung:
**15.06.83 Patentblatt 83/24**

(45) Bekanntmachung des Hinweises auf die Patenterteilung:
**20.05.87 Patentblatt 87/21**

(84) Benannte Vertragsstaaten:
**DE FR GB IT**

(56) Entgegenhaltungen:
**DE-A-2 920 706**
**FR-A-2 517 547**
**GB-A-471 941**
**GB-A-1 571 699**
**US-A-2 902 612**
**US-A-3 442 131**

(73) Patentinhaber: **Linnig, Karl- Heinz, Dornierstrasse 33, D-7990 Friedrichshafen (DE)**

(72) Erfinder: **Linnig, Karl- Heinz, Dornierstrasse 33, D-7990 Friedrichshafen (DE)**

(74) Vertreter: **Patentanwälte Dipl.- Ing. E. Eisele Dr.- Ing. H. Otten, Seestrasse 42, D-7980 Ravensburg (DE)**

### Beschreibung

Die Erfindung betrifft eine Bremsvorrichtung für schwere, sich beschleunigende Gegenstände wie Feuerschutztore, Skilifte, Aufzüge, Seiltrommeln o. dgl., wobei die Linear- oder Drehbewegung der abzubremsenden Gegenstände auf eine Welle oder Nabe einer Bremseinrichtung übertragbar ist.

Bei Feuerschutztoren besteht oftmals die Forderung, daß sich diese im Gefahrenfall selbstständig schließen. Um unabhängig von einem eventuell ausfallenden Energieversorger zu sein, geschieht der Schließvorgang mittels eines Gegengewichtes, welches durch Eigengewicht das Feuerschutztor über eine Umlenkrolle mittels eines Seiles oder einer Kette verschließt.

Um das schwere Tor in Bewegung zu setzen, sind zunächst Haftreibungswiderstände und Rollreibungswiderstände, danach nur noch Rollreibungswiderstände zu überwinden. Bei einem Feuerschutztor mit einem Gewicht von ca. einer Tonne hat es sich gezeigt, daß der Haftreibungsanteil 4/5 und der Rollreibungsanteil nur 1/5 der gesamt aufzubringenden Kraft zur Bewegung des Feuerschutztors ausmacht. Das das Feuerschutztor schließende Gewicht muß deshalb so groß sein, daß sowohl Haftreibungs- und auch Rollreibungswiderstände überwunden werden können. Ist das Feuerschutztor jedoch einmal in Bewegung, so tragen 4/5 des ziehenden Gewichts zur Beschleunigung des Feuerschutztors bei. Es muß deshalb gegen Ende des Schließvorgangs mit mehr oder weniger aufwendigen Mitteln abgebremst werden, um nicht Beschädigungen in der Verankerung oder sonstwo zu erzeugen. Abhilfe hierzu wurde mittels Federsystemen, gegenlaufende Gleichstrommotoren, Dämpfungspuffer oder sonstiges getroffen.

Um Gefahren durch zu schnell schließende Tore zu vermeiden, wurde die Forderung gestellt, daß diese mit gleichförmiger Geschwindigkeit sich bewegen sollen. Eine Vorschrift der Berufsgenossenschaft schlägt deshalb vor, das Tor mit einer Konstantgeschwindigkeit von 0,2 Meter pro Sekunde zu bewegen. Diese Forderung kann normalerweise nur durch konstant laufende Elektromotoren erzielt werden. Bei Verwendung eines Gegengewichts ist jedoch die Umsetzung einer beschleunigenden Bewegung in eine gleichförmige Bewegung nur durch aufwendige Maßnahmen möglich.

Ein ähnliches Problem ergibt sich bei der Abbremsung von anderen schweren Gegenständen, wie es z. B. bei Skiliften auftritt. Auch hier soll der Gegenstand auf eine konstante bestimmte Geschwindigkeit abgebremst werden. Die Erfindung befaßt sich deshalb generell mit der Abbremsung von sich bewegenden Gegenständen in den verschiedensten Formen.

Aus der GB-A-1 571 699 ist eine Bremsvorrichtung bekannt, die zur Abbremsung von schweren Gegenständen dient. Dabei geschieht das Abbremsen einer angetriebenen Trommel mittels einer hydromechanischen Bremse, die an die Rotationswelle der Trommel angeschlossen ist.

Weiterhin ist aus der US-A-2 902 612 eine Vorrichtung bekannt, die als Kupplung nach dem Wirbelstromprinzip arbeitet. Derartige Vorrichtungen können grundsätzlich auch als Bremsvorrichtungen verwendet werden.

Der Erfindung liegt die Aufgabe zugrunde, eine Vorrichtung zu schaffen, die mit konstruktiv einfachsten Mitteln eine beschleunigende Bewegung eines Gegenstands in eine gleichförmige Bewegung mit vorgegebener Geschwindigkeit umsetzt. Dies soll sowohl für beschleunigende Bewegungen des Gegenstandes durch Eigengewicht oder durch Fremdeinwirkung, z. B. mittels Gegengewicht gelten.

Diese Aufgabe wird ausgehend von einer Bremsvorrichtung der einleitend bezeichnenden Art durch die Merkmale des kennzeichnenden Teils des Anspruchs 1 gelöst.

Der Erfindung liegt die Überlegung zugrunde, daß zur Erzielung einer gleichförmigen Bewegung eine Vorrichtung geschaffen wird, die den Gegenstand zunächst nicht abbremst, sondern die anfängliche Beschleunigungsbewegung bis zum gewünschten Wert nahezu unbeeinflußt läßt. Erst nach erfolgter Beschleunigung des Gegenstandes auf eine bestimmte Geschwindigkeit soll die Bremswirkung der erfindungsgemäßen Vorrichtung einsetzen, um die gewünschte konstante Geschwindigkeit beizubehalten. Dieser Vorgang läßt sich konstruktiv besonders einfach mit der vorliegenden Erfindung erreichen. Hierzu wird die Bewegung des Gegenstandes in eine Drehbewegung auf eine Welle umgesetzt, die ihrerseits mit einer Wirbelstrombremse verbunden ist. Das bekannte Wirbelstromprinzip arbeitet mit einem sehr einfachen Aufbau und einer großen Betriebssicherheit. Dabei wird durch einen feststehenden Permanentmagneten mit Einzelpolen wechselnder Polarität ein Magnetfeld erzeugt, welches in einem umlaufenden Läufer Wirbelströme induziert, die ein der Drehzahl proportionales Drehmoment erzeugen. Überträgt man demnach die als Drehbewegung umgesetzte Bewegung des Gegenstandes auf einen Läufer einer Wirbelstrombremse, so wirkt auf die beschleunigende Bewegung des Gegenstandes ein Gegendrehmoment durch die erfindungsgemäße Einrichtung. Selbstverständlich kann wahlweise der Läufer oder die Permanentmagnetscheibe als ein die Drehbewegung aufnehmender rotierender Körper ausgebildet sein.

Das Wirbelstromprinzip eignet sich insbesondere auch deshalb für die verschiedensten Anwendungsfälle, da das Gegendrehmoment - zumindest bis zu einer bestimmten Drehzahl - mit wachsender Drehzahl des Läufers, d. h. mit zunehmender Beschleunigung des Gegenstandes wächst. Der zu bewegende Gegenstand bewegt sich deshalb mit gleichförmiger Geschwindigkeit.

Ein hohes Gegendrehmoment der Wirbelstrom-Bremseinrichtung wird ab einer bestimmten höheren Drehzahl des Läufers erreicht. Es ist deshalb zweckmäßig und zum Teil notwendig, die durch den sich bewegenden Gegenstand erzeugte Drehbewegung derart zu übersetzen, daß die Drehzahl des Läufers das gewünschte Gegendrehmoment erzeugt. Das Übersetzungsgetriebe der erfindungsgemäßen Einrichtung wird deshalb derart ausgestaltet, daß bei vorgegebener maximaler Solldrehzahl an der Antriebswelle der erfindungsgemäßen Einrichtung ein maximales Gegendrehmoment durch die Wirbelstromeinrichtung erzeugt wird.

Der Abstand zwischen dem feststehenden Permanentmagneten und dem umlaufenden Läufer ist variabel einstellbar, da sich dieser unmittelbar auf das zu erzeugende Gegendrehmoment auswirkt. Je kleiner der Abstand, desto größer das Gegendrehmoment. Insofern kann die gleichförmige Geschwindigkeit des zu bewegenden Gegenstandes nachträglich durch einfache Veränderung des Abstandes zwischen Permanentmagneten und Läufer eingestellt werden.

Durch die in den Unteransprüchen aufgeführten Maßnahmen sind vorteilhafte Weiterbildungen und Verbesserungen der im Hauptanspruch angegebenen Bremsvorrichtung möglich.

Gemäß der Weiterbildung nach Unteranspruch 2 wird eine außerordentlich kompakte und damit kleine Bauweise der Bremsvorrichtung erzielt.

Die Weiterbildung der Erfindung nach Unteranspruch 3 und 4 ermöglicht eine vielseitige Verwendung der erfindungsgemäßen Bremseinrichtung. So kann auf die schnellaufende Antriebswelle ein schaltbarer Haftmagnet zur Fixierung des abzubremsenden Gegenstandes in einer bestimmten Lage angebracht sein. Weiterhin kann die zusätzliche Antriebsquelle beispielsweise als separater Antrieb für ein Feuerschutztor verwendet werden.

Gemäß der vorteilhaften Weiterbildung der Erfindung nach Unteranspruch 5 und 6 läßt sich der Schließvorgang z. B. eines schweren Feuerschutztores besonders einfach durchführen. Die Linearbewegung des Tores wird mittels eines Ritzels in eine Drehbewegung umgesetzt, wobei die Drehgeschwindigkeit des Ritzels durch die Wirbelstromeinrichtung konstant gehalten wird. Dabei kann das Ritzel durch eine Kette oder dergleichen angetrieben werden. Es ist jedoch auch eine direkte Übertragung der Drehbewegung der Tragrollen eines Rohres auf die Welle der erfindungsgemäßen Einrichtung möglich. In diesem Fall müßte das Gehäuse der erfindungsgemäßen Einrichtung einschließlich der Wirbelstromeinrichtung am Tor selbst verdrehsicher befestigt werden.

Bei Anwendung der Erfindung bei Kipptoren, sind ohnehin Umlenkrollen meist vorhanden, deren Drehbewegung durch die erfindungsgemäße Einrichtung beeinflußt werden kann.

Ausführungsbeispiele der Erfindung sind in der Zeichnung dargestellt und in der nachfolgenden Beschreibung näher erläutert. Es zeigen

Fig. 1 einen Schnitt durch die erfindungsgemäße Vorrichtung,

Fig. 2 eine schematische Darstellung eines Anwendungsbeispieles mit einem zu schließenden Feuerschutztor,

Fig. 3 ein weiteres Ausführungsbeispiel gem. Fig. 1 mit einer alternativen Gebtriebeanordnung und einer zusätzlichen Halteeinrichtung.

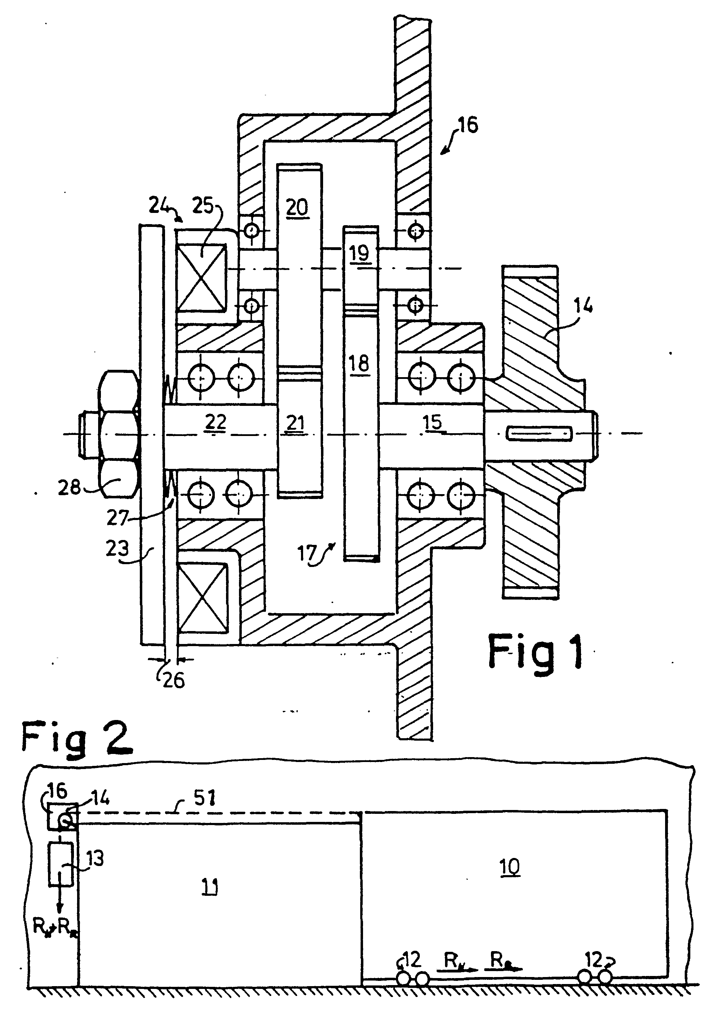

Das in Fig. 2 dargestellte Feuerschutztor 10 soll eine Öffnung 11 verschließen. Hierzu wird das Tor 10 mittels unten oder oben am Tor angebrachten Rollen 12 oder Rädern horizontal bewegt. Die Überwindung der Haftreibung ($R_H$) sowie die Rollreibung ($R_R$) geschieht mittels des Gegengewichtes 13, welches das Tor 10 mittels einer über eine Rolle 14 geführten Kette 51 bewegt. Bei Ausführung des Feuerschutztores mit einem Gewicht von ca. einer Tonne, sind 25 Kilogramm Gegengewicht 13 notwendig, um die Haft- und Rollreibung zu überwinden. Der Haftreibungsanteil beträgt dabei ca. 20 Kilogramm, der Anteil der Rollreibung ca. 5 Kilogramm. Nach einsetzender Bewegung wird das Tor 10 deshalb mit 20 Kilogramm Zugbelastung beschleunigt.

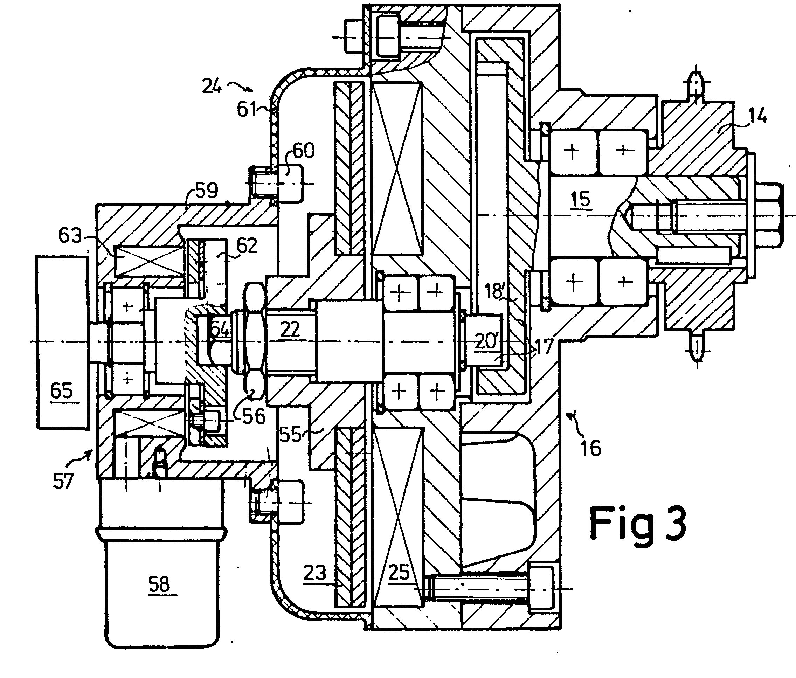

Um einer bestehenden Vorschrift nach einer gleichförmigen Geschwindigkeit des Tores von z. B. 0,2 Meter/Sekunde zu genügen, muß die beschleunigende Bewegung des Tores 10 abgebremst und in eine gleichförmige Bewegung überführt werden. Dies geschieht durch die in den Figuren 1 und 3 dargestellten Bremseinrichtungen 16. Die Einrichtung 16 besteht im wesentlichen aus einem Getriebekasten mit einem Übersetzungsgetriebe mit einer ersten Übersetzungsstufe 1 : 3 und einer zweiten Übersetzungsstufe 1 : 2, sodaß sich eine Gesamtübersetzung von ca. 1 : 6 ergibt. Das Ritzel 14 und damit die Eingangswelle 15 des Übersetzungsgetriebes 17 weist z. B. eine Drehzahl von ca. 50 Umdrehungen pro Minute auf. Durch die Übersetzung mittels der Zahnräder 18 bis 21 dreht sich die Ausgangswelle 22 des Übersetzungsgetriebes 17 mit einer Drehzahl von ca. 300 Umdrehungen pro Minute.

In Fig. 3 ist eine alternative Getriebeform dargestellt, die als Planetengetriebe mit feststehendem Zahnrad 18' und Planetenrad 20' ausgebildet ist. Die Übersetzungsverhältnisse sind entsprechend dem in Fig. 1 dargestellten und zuvor beschriebenen Ausführungsbeispiel zu wählen. Der Vorteil des Planetengetriebes liegt in der wesentlich kleineren Bauweise.

Auf der Ausgangswelle 22 des Übersetzungsgetriebes 17 ist der Läufer 23 der Wirbelstromeinrichtung 24 befestigt. Die Wirbelstromeinrichtung 24 besteht aus einem feststehenden Permanentmagneten 25 mit z. B.

acht Einzelpolen wechselnder Polarität. Der Abstand 26 zwischen dem Permanentmagneten 25 und dem Läufer 23 kann mittels einer Druckfeder 27 oder dergleichen und einer Nachstellschraube 28 variiert werden. Beim Ausführungsbeispiel gem. Fig. 3 geschieht die Verstellung durch Aufschrauben eines Läuferhalters mit Kontermutter. Durch Verkleinerung des Abstandes kann das zu erzeugende Drehmoment vergrößert werden. Bei einem Luftspalt von ca. 1 Millimeter wird z. B. bei einer Drehzahl von ca. 300 Umdrehungen pro Minute ein Gegendrehmoment von 8 kpcm erzeugt. Dieses Gegendrehmoment bewirkt, daß sich das Tor 10 mit einer gleichförmigen Geschwindigkeit von z. B. 0,2 Meter pro Sekunde bewegt. Eine unnötige und gefährliche Beschleunigung des Feuerschutztors wird dadurch vermieden.

Soll die Geschwindigkeit des Feuerschutztores auf einen anderen Wert eingestellt werden, so braucht lediglich der Luftspalt 26 zwischen dem Permanentmagneten 25 und Läufer 23 verändert zu werden.

Das Ausführungsbeispiel nach Fig. 3 entspricht prinzipiell dem Ausführungsbeispiel nach Fig. 1. Insofern sind gleiche Bezugszeichen für gleiche Bauelemente verwendet. Anstelle des Stufengetriebes gem. Ausführungsbeispiel nach Fig. 1 tritt hier jedoch ein Planetengetriebe 18', 20' mit entsprechender Übersetzung. Die Verstellung des Abstandes zwischen dem Permanentmagneten 25 und des Läufers 23 geschieht durch Verstellung der mit einem Gewinde versehenen Läuferhalterung 55 auf der Welle 22, mit Feststellung einer Kontermutter 56.

Zusätzlich zum Ausführungsbeispiel gem. Fig. 1 ist am Ausführungsbeispiel gem. Fig. 3 ein elektrisch schaltbarer Magnet 57 mit Elektroanschluß 58 vorgesehen. Diese in einem Gehäuse 59 angeordnete Einrichtung wird mittels Schrauben 60 und Abdeckgehäuse 61 an das Gehäuse der Bremseinrichtung 16 angeflanscht. Der sich im Gehäuse 59 befindende Anker 62 wird vom Stator 63 angezogen. Der Anker 62 ist mit einer Sechskantschraube 64 axial um die Spaltbreite zwischen Anker 62 und Stator 63 verschiebbar verbunden. Der Sechskant 64 ist mit der Welle 22 fest verbunden. Bei Einschaltung der Bremseinrichtung mittels des Elektroanschlusses 58 wird der Anker 62 gegen den Stator 63 gezogen und damit abgebremst. Der mit der Welle 22 verdrehsicher verbundene Anker 62 kann somit auf die Bremseinrichtung 16 einwirken, sodaß diese festgestellt werden kann.

Die Bremseinrichtung 16 besitzt keine elektrischen Anschlüsse und übt ein Bremsmoment auf das Antriebsritzel 14 nur bei bestimmten Drehzahlen aus. Demgegenüber kann die Einrichtung 57 beliebig von außen gesteuert werden, und damit ebenfalls eine Bremswirkung auf das Ritzel 14 ausüben. Die Hauptaufgabe ist jedoch z. B. ein Feuertor oder dergleichen in einer ganz bestimmten Stellung festzuhalten.

Gemäß einer weiteren Ausbildung kann eine zusätzliche Antriebsquelle 65, z. B. ein Getriebemotor oder dergleichen an die Bremseinrichtung angeflanscht werden. Mit Hilfe eines derartigen Antriebmotors könnte z. B. dann ein geöffnetes Tor wieder verschlossen werden.

Die erfindungsgemäße Einrichtung kann in abgewandelter Form selbstverständlich auch zur Abbremsung anderer Gegenstände verwendet werden. Bei entsprechender Dimensionierung der einzelnen Bauteile kann z. B. auch eine Notbremseinrichtung für Aufzüge, Seilbahnen oder andere Gegenstände geschaffen werden. Unerheblich ist es dabei, ob die sich beschleunigenden Gegenstände eine Linear oder Drehbewegung ausführen. Maßgebend ist die Umsetzung dieser Bewegung in eine Drehbewegung auf das Ritzel 14 und - gegebenenfalls mittels einer Übersetzung - auf die abbremsende Wirbelstromeinrichtung 24.

**Patentansprüche**

1. Bremsvorrichtung (16) für schwere, sich beschleunigende Gegenstände wie Feuerschutztore, Skilifte, Aufzüge, Seiltrommeln o. dgl., wobei die Linear- oder Drehbewegung der abzubremsenden Gegenstände auf eine Welle (15) oder Nabe einer Bremseinrichtung übertragbar ist, dadurch gekennzeichnet, daß die Drehbewegung der Welle (15) oder Nabe auf eine Wirbelstrombremseinrichtung (16) übertragen wird, bestehend aus einem Permanentmagneten (25) und einem im variablen Abstand (26) hierzu angeordneten Läufer (23) und daß das Bkremsmoment der Vorrichtung mittels eines angeflanschten Übersetzungsgetriebes (17) sowie der Abstand (26) zwischen Läufer (23) und Permanentmagneten (25) derart einstellbar ist, daß die Wirbelstrombremseinrichtung ein maximales Gegenmoment und damit eine gleichförmige Bewegung des Gegenstandes mit konstanter Geschwindigkeit erzeugt.

2. Vorrichtung nach Anspruch 1, dadurch gekennzeichnet, daß das Übersetzungsgetriebe (17) als zweistufiges Getriebe (18 bis 21) oder als Planetengetriebe (18', 20') ausgebildet ist, wobei der Läufer (23) auf der schnellaufenden Antriebswelle (22) angeordnet ist.

3. Vorrichtung nach Anspruch 1 oder 2, dadurch gekennzeichnet, daß auf die schnellaufende Antriebswelle (22) ein elektrisch schaltbarer Haftmagnet (57) einwirkt, zur Feststellung oder Fixierung der Bremseinrichtung (22, 23, 15) und damit des Ritzels in einem bestimmten Haltezustand.

4. Vorrichtung nach einem der Ansprüche 1 bis 3, dadurch gekennzeichnet, daß auf die schnellaufende Antriebswelle (22) oder auf die langsamlaufende Eingangswelle (15) ein zusätzlicher Antriebsmotor (65) ggf. mit Getriebeübersetzung einwirkt.

5. Vorrichtung nach einem oder mehreren der vorhergehenden Ansprüche, dadurch gekennzeichnet, daß ein auf- oder über Rollen (12) geführtes Feuerschutztor o. dgl. mittels einer über ein Ritzel (14) laufenden Kette (51) antreibbar ist und daß das Ritzel (14) und damit das Feuerschutztor (10) über die Wirbelstrombremseinrichtung (16) abbremsbar ist.

6. Vorrichtung nach Anspruch 5, dadurch gekennzeichnet, daß anstelle des Ritzels (14) die Bremseinrichtung (16) auf wenigstens eine antreibbare Transportrolle (12) des zu bewegenden Gegenstandes (10) einwirkt.

## Claims

1. Braking device (16) for heavy accelerating objects such as fire-check doors, ski-lifts, elevators, cable drums or the like, the linear or rotary movement of the objects to be braked being transmissible to a shaft (15) or hub of a braking device, characterised in that the rotary movement of the shaft (15) or hub is transmitted to an eddy current braking device (16) consisting of a permanent magnet (25) and a rotor (23) disposed at a variable distance (26) therefrom and in that the braking moment of the device can, by a flanged-on step-up gearing (17), and also the distance (26) between rotor (23) and permanent magnet (25), be so adjusted that the eddy current braking device generates maximum opposing moment and thus a uniform movement of the object at a constant speed.

2. A device according to Claim 1, characterised in that the step-up gearing (17) is constructed as a two-stage gearing (18-21) or as a planetary gearing (18', 20'), the rotor (23) being disposed on the high speed drive shaft (22).

3. A device according to Claim 1 or 2, characterised in that for setting or fixing the braking device (22, 23, 15) and thus for setting or fixing the pinion in a specific holding condition, an electrically switchable magnetic clamp (57) acts on the high speed drive shaft (22).

4. A device according to one of Claims 1 to 3, characterised in that an auxiliary driving motor (65), possibly with a step-up gearing acts on the high speed drive shaft (22) or on the slow speed input shaft (15).

5. A device according to one or more of the preceeding Claims, characterised in that a fire-check door or the like guided on or via rollers (12) is adapted to be driven by means of a chain (51) passing over a pinion (14) and in that the pinion (14) and thus the fire-check door (10) can be braked by the eddy current braking device (16).

6. A device according to Claim 5, characterised in that instead of the pinion (14), the braking device (16) acts on at least one driveable transpart roller (12) of the object (10) which is to be moved.

## Revendications

1°) Dispositif de freinage (16) pour des objets lourds qui s'accélèrent tels que des portes coupe-feu, des remonte-pentes, des ascenseurs, des tambours à câble ou analogues, dans lesquels le mouvement linéaire ou le mouvement de rotation de l'objet à freiner est susceptible d'être transmis à un axe (15) ou à un moyeu d'un dispositif de freinage, caractérisé en ce que le mouvement de rotation de l'axe (15) ou du moyeu est transmis à un dispositif de freinage par effet de courant de Foucault (16) qui se compose d'un aimant permanent (25) et d'un rotor (23) prévus à une distance variable (26) et en ce que le couple de freinage exercé par le dispositif se règle à l'aide d'une transmission (17) de démultiplication, fixée par bride ainsi que la distance (26) entre le rotor (23) et l'aimant permanent (25), le dispositif de freinage a courant de Foucault exerçant un couple antagoniste maximum et assurant ainsi un déplacement uniforme de l'objet à vitesse constante.

2°) Dispositif selon la revendication 1, caractérisé en ce que la transmission de démultiplication (17) est une transmission à deux étages (18... 21) ou une transmission planétaire (18', 20'), le rotor (23) étant monté sur l'arbre d'entraînement (22) tournant le plus rapidement.

3°) Dispositif selon la revendication 1 ou 2, caractérisé en ce qu'un aimant d'accrochage (57) à commutation électrique est monté sur l'arbre d'entraînement (22) tournant le plus rapidement, pour fixer ou bloquer le dispositif de freinage (22, 23, 15) et ainsi le pignon dans un certain état de blocage.

4°) Dispositif selon l'une des revendications 1 à 3, caractérisé en ce qu'un moteur d'entraînement (55) complémentaire avec le cas échéant une transmission de démultiplication agit sur l'arbre d'entraînement (22) tournant le plus rapidement ou sur l'arbre d'entrée (15) tournant le plus lentement.

5°) Dispositif selon l'une ou plusieurs des revendications précédentes, caractérisé en ce qu'une porte coupe-feu analogue s'appuyant ou étant suspendue à des galets (12) est susceptible d'être entraînée par une chaîne (51) passant sur un pignon (14) et en ce que le pignon (14) et ainsi la porte coupe-feu (10) sont susceptibles d'être freinés par le dispositif de freinage par courant de Foucault (16).

6°) Dispositif selon la revendication 5, caractérisé en ce qu'au lieu d'agir sur le pignon (14), le dispositif de freinage (16) agit sur au moins un galet de transport (12), moteur appartenant à l'objet (10) à déplacer.

Fig 1

Fig 2

Fig 3